# EUROPEAN PATENT APPLICATION

(11) **EP 3 267 383 A1**
(43) Date of publication of application: **10.01.2018**
(21) Application number: 16758443.2
(22) Date of filing: 24.02.2016
(51) Int. Cl.: G06Q 20/40

(54) **DATA TRANSMISSION METHOD AND SYSTEM**

(30) Priority: 02.03.2015 CN 201510093345
(71) Applicant: Alibaba Group Holding Limited, Grand Cayman (KY)
(72) Inventor: CHEN, Yongping, Hangzhou Zhejiang 311121 (CN)
(74) Representative: Conroy, John
(86) International application number: PCT/CN2016/074419
(87) International publication number: WO 2016/138827

(57) **Abstract**

The present application discloses a data transmission method and a system thereof. The data transmission method includes the following steps: determining a credit between a receiver and a sender; selecting a corresponding data transmission protection mechanism according to the credit; and transmit data according to the selected data transmission protection mechanism. Data is split according to the credit between the receiver and the sender, and differentiated data transmission protection mechanisms correspond to different situations. Therefore, the provided data transmission method and the system thereof have good user experience and high execution efficiency

## Description

### Technical Field

The present application relates to the field of computer technologies, and in particular, to a data transmission method and system.

### Related Art

In the prior art, to ensure the security of data, after authentication of the identity of a receiver, data is sent by a sender to the receiver. Therefore, regardless of different data formats and data volumes, a uniform process is employed. When the data volume is relatively small, the time it takes to authenticate a receiver may be longer than the time for data transmission. When data transmission is performed multiple times, the receiver may need to be authenticated several times in a period of time. As for the sender, multiple receivers need to be authenticated separately.

It can be seen that the existing data transmission method has poor user experience and low execution efficiency.

Therefore, based on the study on the existing data transmission method and system, the inventor provides a data transmission method and system that have good user experience and high execution efficiency.

### Summary of the Invention

Embodiments of the present application provide a solution of a data transmission method which has good user experience and high execution efficiency. Specifically, the data transmission method includes the following steps:
determining a credit between a receiver and a sender;
selecting a corresponding data transmission protection mechanism according to the credit between the receiver and the sender; and
transmitting data under the protection of the selected data transmission protection mechanism.

The embodiments of the present application further provide a data transmission method, which includes the following steps:
receiving a data transmission request of a sender;
determining a credit between a receiver and the sender of data transmission;
selecting a corresponding data transmission protection mechanism according to the credit between the receiver and the sender; and
providing the protection of the data transmission protection mechanism to complete the data transmission.

The embodiments of the present application further provide a data transmission method, which includes the following steps:
sending a data transmission request to a server; and
transmitting data to a receiver under the protection of a data transmission protection mechanism;
wherein, the data transmission protection mechanism is selected by the server according to a credit between the receiver and a sender of data transmission.

The embodiments of the present application further provide a data transmission system, which includes:
an operation module configured to determine a credit between a receiver and a sender;
a security module configured to select a corresponding data transmission protection mechanism according to the credit between the receiver and the sender; and
a transmission module configured to transmit data from the sender to the receiver under the protection of the selected data transmission protection mechanism.

The embodiments of the present application further provide a data transmission system, which includes:
a receiving module configured to receive a data transmission request of a sender;
an operation module configured to determine a credit between a receiver and the sender of data transmission;
a security module configured to select a corresponding data transmission protection mechanism according to the credit between the receiver and the sender; and
a transmission module configured to provide the protection of the data transmission protection mechanism to complete the data transmission.

The embodiments of the present application further provide a data transmission system, which includes:
a transmission module configured to send a data transmission request to a server, and transmit data to a receiver under the protection of a data transmission protection mechanism;
wherein, the data transmission protection mechanism is selected by the server according to a credit between the receiver and a sender.

The data transmission method and system provided in the embodiments of the present application have at least the following beneficial effects:

Data is split according to a credit between a receiver and a sender, and differentiated data transmission protection mechanisms correspond to different situations. Therefore, the provided data transmission method and the method thereof have good user experience and high execution efficiency.

### Brief Description of the Accompanying Drawings

The accompanying drawings described here are used to provide further understanding of the present application and constitute a part of the present application. The schematic embodiments of the present application and the description thereof are used to illustrate the present application, but do not constitute improper limitations to the present application. In the drawings:
FIG. 1 is a flowchart of a data transmission method according to an embodiment of the present application;
FIG. 2 is a flowchart of determining a credit between a receiver and a sender according to an embodiment of the present application;
FIG. 3 is a flowchart of selecting a corresponding data transmission protection mechanism according to a credit according to an embodiment of the present application; and
FIG. 4 is a schematic structural diagram of a data transmission system according to an embodiment of the present application.

### Detailed Description

To solve the technical problems of poor user experience and low execution efficiency of an existing data transmission method, a data transmission method and system provided in the embodiments of the present application split data according to a credit between a receiver and a sender, and differentiated data transmission protection mechanisms correspond to different situations. Therefore, the provided data transmission method and the system thereof have good user experience and high execution efficiency.

In order to make the objectives, technical solutions, and advantages of the present application clearer, the technical solutions of the present application are described clearly and completely below with reference to the specific embodiments of the present application and the corresponding drawings. Apparently, the described embodiments are merely some of rather than all of the embodiments of the present application. Based on the embodiments in the present application, all other embodiments obtained by those of ordinary skill in the art without paying creative efforts all belong to the protection scope of the present application.

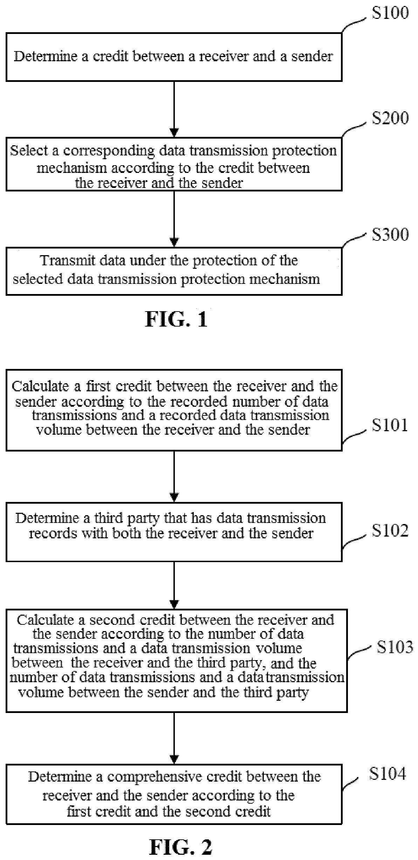

FIG. 1 is a flowchart of a data transmission method according to an embodiment of the present application, which specifically includes the following steps:
S100: A credit between a receiver and a sender is determined.

This step is used for quantizing a relation between the receiver and the sender according to data transmission records between the receiver and the sender by using a credit. For example, a receiver that transmits data with the sender multiple times is differentiated from a receiver that never transmits data with the sender, thereby improving user experience. The following will describes how to determine the credit between the receiver and the sender in detail, and it is not described here.

S200: A corresponding data transmission protection mechanism is selected according to the credit between the receiver and the sender.

For a receiver having a low credit with the sender, a warning is sent to the sender and a check is performed. Data is transmitted only after the check succeeds.

For a receiver having a certain credit with the sender, during data transmission within the range of the credit, data is transmitted without performing a check.

For a receiver having a certain credit with the sender, when a data transmission volume exceeds the credit, a warning is sent to the sender and a check is performed. Data is transmitted only after the check succeeds.

S300: Data is transmitted according to the selected data transmission protection mechanism.

In this embodiment of the present application, data is split according to a credit between a receiver and a sender, and differentiated data transmission protection mechanisms correspond to different situations. Therefore, the provided data transmission method and the system thereof have good user experience and high execution efficiency.

The following describes how to determine the credit between the receiver and the sender in detail.

Further, the determining a credit between a receiver and a sender specifically includes:
calculating a first credit according to the recorded number of data transmissions and a recorded data transmission volume between the receiver and the sender.

To accurately determine the credit between the receiver and the sender, this embodiment of the present application, by taking a year before the data transmission, collects statistics on data transmission records in one dynamic year.

In one dynamic year, it is set that:
N₁ is the number of times the sender transmits data to the receiver, and V₁ is a data transmission volume of data transmitted from the sender to the receiver;
N₂ is the number of times the receiver transmits data to the sender, and V₂ is a data transmission volume of data transmitted from the receiver to the sender;
when N₁+N₂≥10, it is set that a trust coefficient between the sender and the receiver is T=1, and when N₁+N₂<10, it is set that T=(N₁₀+N₂)/10; and
the first credit between the receiver and the sender is C=(V₁+V₂)*T/2, that is, the first credit is equal to a mean value of data transmission volumes multiplied by the trust coefficient.

For example, the data transmission volume of data transmitted from the sender to the receiver is 10M bytes, and the sender transmits data to the receiver twice; the data transmission volume of data transmitted from the receiver to the sender is 20M bytes, and the receiver transmits data to the sender four times. In this case, the trust coefficient T=(2+4)/10=0.6; and the first credit C=(10+20)*0.6/2=9M bytes.

Further, the determining a credit between a receiver and a sender specifically includes:
determining a third party that has data transmission records with both the receiver and the sender; and
calculating a second credit between the receiver and the sender according to the number of data transmissions and a data transmission volume between the receiver and the third party, and the number of data transmissions and a data transmission volume between the sender and the third party.

In the embodiment provided in the present application, when there is no data transmission record between the receiver and the sender, a third party that has data transmission records with both the receiver and the sender is used to accurately determine the credit between the receiver and the sender.

It is assumed that, a trust coefficient and a credit between the third party and the receiver are T₁ and C₁ respectively; a trust coefficient and a credit between the sender and the third party are T₂ and C₂ respectively. It is set that the trust coefficient T=max (T₁, T₂), and the credit C=max (C₁, C₂). In other words, a maximum of the trust coefficient between the third party and the receiver and the trust coefficient between the sender and the third party is taken as the trust coefficient. Similarly, a maximum of the credit between the third party and the receiver and the credit between the sender and the third party is taken as the credit. It should be pointed out that, there are also other methods for selecting values of the trust coefficient and the credit. However, these alternative value selecting methods should not be construed as departing from the substantial protection scope of the embodiments of the present application.

Referring to FIG. 2, further, the determining a credit between a receiver and a sender specifically includes:
S101: A first credit between the receiver and the sender is calculated according to the recorded number of data transmissions and a recorded data transmission volume between the receiver and the sender.
S102: A third party that has data transmission records with both the receiver and the sender is determined.
S103: A second credit between the receiver and the sender is calculated according to the number of data transmissions and a data transmission volume between the receiver and the third party, and the number of data transmissions and a data transmission volume between the sender and the third party.
S104: A comprehensive credit between the receiver and the sender is determined according to the first credit and the second credit.

In the embodiment provided in the present application, not only the first credit of the direct relation between the receiver and the sender but also the second credit of the indirect relation that occurs between the receiver and the sender through the third party is calculated. Therefore, the calculated credit is more accurate.

Still taking the above example for description, it is assumed that the first credit that occurs is C₁ₛₜ, and the second credit that occurs is C_{2nd}; in this case, weights of the first credit and the second credit are separately set according to specific conditions, and the obtained comprehensive credit is a weighted sum of the first credit and the second credit. Alternatively, it is set that the comprehensive credit C_{comprehensive}=max (C₁ₛₜ, C_{2nd}), that is, the comprehensive credit is a larger one of the first credit and the second credit. Certainly, there are also other methods for selecting the value of the comprehensive credit. However, these methods should not be construed as departing from the protection scope of the embodiments of the present application.

The above describes specifically how to determine the credit between the receiver and the sender. The following will describes specifically how to select a corresponding data transmission protection mechanism according to the credit.

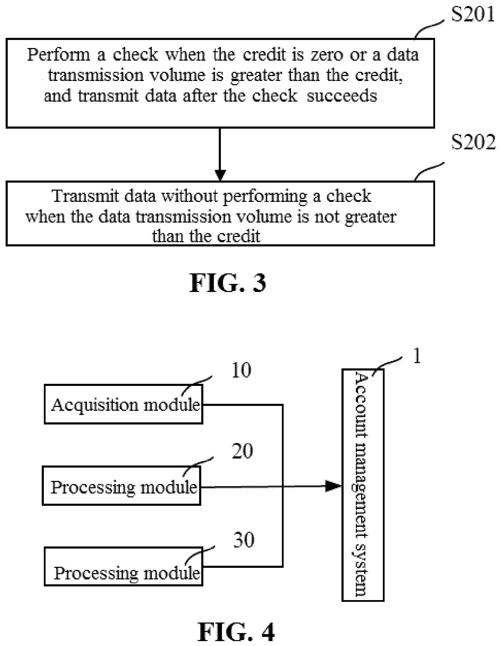

Referring to FIG. 3, further, the selecting a corresponding data transmission protection mechanism according to the credit between the receiver and the sender specifically includes:
S201: A check is performed when the credit is zero or a data transmission volume is greater than the credit, and data is transmitted after the check succeeds.
S202: Data is transmitted without performing a check when the data transmission volume is not greater than the credit.

When the credit is zero or the data transmission volume is greater than the credit, the sender is reminded by a warning, and a check is performed. Data is transmitted only after the check succeeds, thus ensuring the security of the data. When the data transmission volume is not greater than the credit, data is directly transmitted, thereby reducing checks of the sender, and achieving good user experience.

Further, the receiver is a payee, the sender is a payer, and the data is an amount.

The determining a credit between a receiver and a sender specifically includes:
determining a credit amount between the payee and the payer.

Further, the selecting a corresponding data transmission protection mechanism according to the credit between the receiver and the sender specifically includes:
sending a warning to the payee and performing a check when the credit amount is zero, and transmitting the amount after the check succeeds;
sending a payment amount over-limit warning and performing a check when the payment amount is greater than the credit amount, and transmitting the amount after the check succeeds; and
transmitting the data without performing a check when the payment amount is not greater than the credit amount.

In this embodiment of the present application, a fund payment or transfer method is provided. A credit amount between a receiver and a sender is determined. When the credit amount between the receiver and the sender is zero or a transaction amount exceeds the credit amount, a check is performed, and payment or transfer can be performed only after the check succeeds. When the transaction amount does not exceed the credit amount, payment or transfer is directly performed. Particularly, this embodiment of the present application further provides a warning for a payee whose credit amount is zero, to remind the payer to pay attention to the identity of the payee, which is differentiated from the ordinary check.

Further, for a server terminal, a data transmission method specifically includes the following steps:
receiving a data transmission request of a sender;
determining a credit between a receiver and the sender of data transmission;
selecting a corresponding data transmission protection mechanism according to the credit between the receiver and the sender; and
providing the protection of the data transmission protection mechanism to complete the data transmission.

Further, the providing the protection of the data transmission protection mechanism to complete the data transmission specifically includes:
sending a warning to the sender and performing a check when the credit is zero or a data transmission volume is greater than the credit, and transmitting data after the check succeeds; and
sending the credit between the receiver and the sender to the sender when the data transmission volume is not greater than the credit, and transmitting data without performing a check.

In this embodiment of the present application, for a remote server that provides data transmission, first, the server receives a data transmission request of a sender client of data transmission. Then, according to data transmission records between the sender client and a receiver client in the server, a credit, i.e., a trusted data transmission volume, between the receiver and the sender is determined. Next, a data transmission protection mechanism is selected according to a relation of a current data transmission volume between the sender client and the receiver client with the credit. Finally, the protection of the data transmission protection mechanism is provided to complete data transmission between the sender client and the receiver client.

For example, a customer A serving as a sender needs to send a file with a size of 1G to a customer B serving as a receiver. The server first receives a data transmission request of the customer A. Then, a credit, i.e., a trusted data transmission volume, between the customer A and the customer B is determined according to data transmission records between the customer A and the customer B in the server.

It is assumed that the credit between the customer A and the customer B is 10G. The credit 10G is greater than the current data transmission volume 1G, and thus the credit between the customer A and the customer B is sent to the customer A, and data is transmitted without performing a check.

When the credit between the customer A and the customer B is 1M, the credit 1M is less than the current data transmission volume 1G, and thus a warning is sent to the customer A, and a check is performed. Data is transmitted only after the check of the customer A succeeds.

When the credit between the customer A and the customer B is 0, a warning is sent to the customer A, and a check is performed. Data is transmitted only after the check of the customer A succeeds.

Further, the receiver is a payee, the sender is a payer, and the data is an amount.

The determining a credit between a receiver and the sender specifically includes:
determining a credit amount between the payee and the payer.

For example, a customer A serving as a payer needs to pay 100,000 yuan to a customer B serving as a payee. The server first receives a payment request of the customer A. Then, a credit amount, i.e., a trusted payment amount, between the customer A and the customer B is determined according to economic transaction records between the customer A and the customer B in the server.

It is assumed that the credit amount between the customer A and the customer B is one million yuan. The credit amount, i.e., one million yuan, is greater than the current payment amount, i.e., 100,000 yuan, and thus the credit amount between the customer A and the customer B: one million yuan, is sent to the customer A, and payment is made without performing a check.

When the credit amount between the customer A and the customer B is 10,000 yuan, the credit amount, i.e., 10,000 yuan, is less than the current payment amount, i.e., 100,000 yuan, and thus a warning is sent to the customer A, and a check is performed. Payment can be made only after the check of the customer A succeeds.

When the credit amount between the customer A and the customer B is 0, a warning is sent to the customer A, and a check is performed. Payment can be performed only after the check of the customer A succeeds.

Further, for a client, a data transmission method is provided, which includes the following steps:
sending a data transmission request to a server; and
transmitting data to a receiver under the protection of a data transmission protection mechanism;
wherein, the data transmission protection mechanism is selected by the server according to a credit between the receiver and a sender of data transmission.

Further, the transmitting data to a receiver under the protection of a data transmission protection mechanism specifically includes:
receiving a warning sent by the server and performing a check when the credit is zero or a data transmission volume is greater than the credit, and transmitting data after the check succeeds; and
receiving the credit between the receiver and the sender sent by the server when the data transmission volume is not greater than the credit, and transmitting data without performing a check.

In this embodiment of the present application, for clients of data transmission, first, a sender client sends a data transmission request to a server. The server provides different data transmission protection mechanisms according to different specific conditions after processing the data transmission request. The sender client transmits data to a receiver client under the protection of the data transmission protection mechanism. Wherein, the data transmission protection mechanism is selected by the server according to a credit between the receiver client and the sender client of data transmission.

For example, a customer A serving as a sender needs to send a file with a size of 1G to a customer B serving as a receiver. The customer A sends a data transmission request to the server through a sender client. Then, under the protection of a data transmission protection mechanism provided by the server, the customer A transmits data to the customer B serving as a receiver client.

Wherein, the data transmission protection mechanism is selected by the server according to a credit between the receiver customer B and the sender customer A of data transmission.

It is assumed that, the credit between the customer A and the customer B is 10G. The credit 10G is greater than the current data transmission volume 1G, and thus the customer A receives the credit between the customer A and the customer B, and transmits data without performing a check.

When the credit between the customer A and the customer B is 1M, the credit 1M is less than the current data transmission volume 1G, and therefore the customer A receives a warning and performs a check. Data can be transmitted only after the check of the customer A succeeds.

When the credit between the customer A and the customer B is 0, the customer A receives a warning and performs a check. Data can be transmitted only after the check of the customer A succeeds.

Further, the receiver is a payee, the sender is a payer, and the data is an amount.

For example, a customer A serving as a payer needs to pay 100,000 yuan to a customer B serving as a payee. The customer A sends a payment request to a server through a sender client. Then, under the protection of a data transmission protection mechanism provided by the server, the customer A transmits the amount to the customer B serving as a receiver client.

Wherein, the data transmission protection mechanism is selected by the server according to a credit amount between the receiver customer B and the sender customer A of data transmission.

It is assumed that, the credit amount between the customer A and the customer B is one million yuan. The credit amount, i.e., one million yuan, is greater than the current payment amount, i.e., 100,000 yuan, and thus the customer A receives the credit amount between the customer A and the customer B: one million yuan, and payment is made without performing a check.

When the credit amount between the customer A and the customer B is 10,000 yuan, the credit amount, i.e., 10,000 yuan, is less than the current payment amount, i.e., 100,000 yuan, and thus the customer A receives a warning and performs a check. Payment can be made only after the check of the customer A succeeds.

When the credit amount between the customer A and the customer B is 0, the customer A receives a warning and performs a check. Payment can be made only after the check of the customer A succeeds.

The above is the data transmission method provided in the embodiment of the present application. Based on the same idea, as shown in FIG. 4, the present application further provides a data transmission system 1, which includes:
an operation module 10 configured to determine a credit between a receiver and a sender;
a selection module 20 configured to select a corresponding data transmission protection mechanism according to the credit; and
a transmission module 30 configured to transmit data under the protection of the selected data transmission protection mechanism.

Further, the operation module 10 being configured to determine a credit between a receiver and a sender is specifically configured to:
calculate a first credit between the receiver and the sender according to the recorded number of data transmissions and a recorded data transmission volume between the receiver and the sender.

Further, the operation module 10 being configured to determine a credit between a receiver and a sender is specifically configured to:
determine a third party that has data transmission records with both the receiver and the sender; and
calculate a second credit between the receiver and the sender according to the number of data transmissions and a data transmission volume between the receiver and the third party, and the number of data transmissions and a data transmission volume between the sender and the third party.

Further, the operation module 10 being configured to determine a credit between a receiver and a sender is specifically configured to:
calculate a first credit between the receiver and the sender according to the recorded number of data transmissions and a recorded data transmission volume between the receiver and the sender;
determine a third party that has data transmission records with both the receiver and the sender;
calculate a second credit between the receiver and the sender according to the number of data transmissions and a data transmission volume between the receiver and the third party, and the number of data transmissions and a data transmission volume between the sender and the third party; and
determine a comprehensive credit between the receiver and the sender according to the first credit and the second credit.

Further, the operation module 10 being configured to determine a comprehensive credit between the receiver and the sender according to the first credit and the second credit is specifically configured to:
take a maximum of the first credit and the second credit as the comprehensive credit, or take a weighted sum of the first credit and the second credit as the comprehensive credit.

Further, the selection module 20 being configured to select a corresponding data transmission protection mechanism according to the credit is specifically configured to:
perform a check when the credit is zero or a data transmission volume is greater than the credit, and transmit data after the check succeeds; and
transmit data without performing a check when the data transmission volume is not greater than the credit.
Further, the receiver is a payee, the sender is a payer, and the data is an amount; and
the operation module 10 being configured to determine a credit between a receiver and a sender is specifically configured to:
   determine a credit amount between the payee and the payer.

Further, the selection module 20 being configured to select a corresponding data transmission protection mechanism according to the credit between the receiver and the sender is specifically configured to:
send a warning to the payee and perform a check when the credit amount is zero, and transmit the amount after the check succeeds;
send a payment amount over-limit warning and perform a check when the payment amount is greater than the credit amount, and transmit the amount after the check succeeds; and
transmit the amount without performing a check when the payment amount is not greater than the credit amount.

In this embodiment of the present application, data is split according to the credit between the receiver and the sender, and differentiated data transmission protection mechanisms correspond to different situations. Therefore, the provided data transmission method and the system thereof have good user experience and high execution efficiency.

Further, a data transmission system includes:
a receiving module configured to receive a data transmission request of a sender;
an operation module configured to determine a credit between a receiver and the sender of data transmission;
a security module configured to select a corresponding data transmission protection mechanism according to the credit between the receiver and the sender; and
a transmission module configured to provide the protection of the data transmission protection mechanism to complete the data transmission.

Further, the transmission module is configured to:
send a warning to the sender and perform a check when the credit is zero or a data transmission volume is greater than the credit, and transmit data after the check succeeds; and
send the credit between the receiver and the sender to the sender when the data transmission volume is not greater than the credit, and transmit data without performing a check.

Further, the receiver is a payee, the sender is a payer, and the data is an amount; and the credit is a credit amount between the payee and the payer.

Further, a data transmission system includes:
a transmission module configured to send a data transmission request to a server, and transmit data to a receiver under the protection of a data transmission protection mechanism;
wherein, the data transmission protection mechanism is selected by the server according to a credit between the receiver and a sender of data transmission.

Further, the transmission module is configured to:
receive a warning sent by the server and perform a check when the credit is zero or a data transmission volume is greater than the credit, and transmit data after the check succeeds; and
receive the credit between the receiver and the sender sent by the server when the data transmission volume is not greater than the credit, and transmit data without performing a check.

Further, the receiver is a payee, the sender is a payer, and the data is an amount.

Persons skilled in the art should understand that, the embodiments of the present invention may be provided as a method, a system, or a computer program product. Therefore, the present invention may be implemented in the form of a complete hardware embodiment, a complete software embodiment, or an embodiment combining software and hardware. Moreover, the present invention may employ the form of a computer program product implemented on one or more computer usable storage media (including, but not limited to, a magnetic disk memory, a CD-ROM, an optical memory, and the like) including computer usable program code.

The present invention is described with reference to flowcharts and/or block diagrams of the method, device (system), and computer program product according to the embodiments of the present invention. It should be understood that computer program instructions may be used to implement each process and/or block in the flowcharts and/or block diagrams and a combination of a process and/or a block in the flowcharts and/or the block diagrams. These computer program instructions may be provided for a general-purpose computer, a special-purpose computer, an embedded processor, or a processor of another programmable numerical processing device to generate a machine, so that the instructions executed by a computer or a processor of another programmable numerical processing device generate an apparatus for implementing a specified function in one or more processes in the flowcharts and/or in one or more blocks in the block diagrams.

These computer program instructions may also be stored in a computer readable memory that can instruct the computer or another programmable numerical processing device to work in a particular manner, such that the instructions stored in the computer readable memory generate an article of manufacture that includes an instruction apparatus. The instruction apparatus implements a specified function in one or more processes in the flowcharts and/or in one or more blocks in the block diagrams.

These computer program instructions may also be loaded onto a computer or another programmable numerical processing device, such that a series of operating steps are performed on the computer or another programmable device, thereby generating computer-implemented processing. Therefore, the instructions executed on the computer or another programmable device provide steps for implementing a specified function in one or more processes in the flowcharts and/or in one or more blocks in the block diagrams.

In a typical configuration, the computing device includes one or more processors (CPUs), an input/output interface, a network interface, and a memory.

The memory may include a volatile memory, a random access memory (RAM) and/or a non-volatile memory or the like in a computer readable medium, for example, a read-only memory (ROM) or a flash RAM. The memory is an example of the computer readable medium.

The computer readable medium includes non-volatile or volatile, and movable or non-movable media, and can implement information storage by means of any method or technology. Information may be a computer readable instruction, a numerical structure, and a module of a program or other numerical values. A storage medium of a computer includes, for example, but is not limited to, a phase change memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disc read-only memory (CD-ROM), a digital versatile disc (DVD) or other optical storages, a cassette tape, a magnetic tape/magnetic disk storage or other magnetic storage devices, or any other non-transmission medium, and can be used to store information accessible to the computing device. According to the definition in this text, the computer readable medium does not include transitory media, such as a modulated data signal and a carrier.

It should be further noted that, the terms "include", "comprise", or any variants thereof are intended to cover a non-exclusive inclusion, such that a process, a method, a commodity or a device that includes a series of elements not only includes such elements but also includes other elements not specified expressly, or may further include inherent elements of the process, method, commodity, or device. Without more restrictions, an element limited by the phrase "include a/an..." does not exclude other same elements existing in the process, method, commodity, or device that includes the element.

Persons skilled in the art should understand that, the embodiments of the present application may be provided as a method, a system, or a computer program product. Therefore, the present application may be implemented in the form of a complete hardware embodiment, a complete software embodiment, or an embodiment combining software and hardware. Moreover, the present application may employ the form of a computer program product implemented on one or more computer usable storage media (including, but not limited to, a magnetic disk memory, a CD-ROM, an optical memory, and the like) including computer usable program code.

The above are merely the embodiments of the present application, which are not used to limit the present application. For persons skilled in the art, the present application may have various changes and alterations. Any modification, equivalent replacement, and improvement made within the spirit and principle of the present application should be included in the scope of the claims of the present application.

## Claims

1. A data transmission method, comprising the following steps:
determining a credit between a receiver and a sender;
selecting a corresponding data transmission protection mechanism according to the credit between the receiver and the sender; and
transmitting data under the protection of the selected data transmission protection mechanism.

2. The method of claim 1, wherein the determining a credit between a receiver and a sender specifically comprises:
calculating a first credit between the receiver and the sender according to the recorded number of data transmissions and a recorded data transmission volume between the receiver and the sender.

3. The method of claim 1, wherein the determining a credit between a receiver and a sender specifically comprises:
determining a third party that has data transmission records with both the receiver and the sender; and
calculating a second credit between the receiver and the sender according to the number of data transmissions and a data transmission volume between the receiver and the third party, and the number of data transmissions and a data transmission volume between the sender and the third party.

4. The method of claim 1, wherein the determining a credit between a receiver and a sender specifically comprises:
calculating a first credit between the receiver and the sender according to the recorded number of data transmissions and a recorded data transmission volume between the receiver and the sender;
determining a third party that has data transmission records with both the receiver and the sender;
calculating a second credit between the receiver and the sender according to the number of data transmissions and a data transmission volume between the receiver and the third party, and the number of data transmissions and a data transmission volume between the sender and the third party; and
determining a comprehensive credit between the receiver and the sender according to the first credit and the second credit.

5. The method of claim 4, wherein the determining a comprehensive credit between the receiver and the sender according to the first credit and the second credit specifically comprises:
taking a maximum of the first credit and the second credit as the comprehensive credit, or taking a weighted sum of the first credit and the second credit as the comprehensive credit.

6. The method of claim 1, wherein the selecting a corresponding data transmission protection mechanism according to the credit between the receiver and the sender specifically comprises:
performing a check when the credit is zero or a data transmission volume is greater than the credit, and transmitting data after the check succeeds; and
transmitting data without performing a check when the data transmission volume is not greater than the credit.

7. The method of claim 1, wherein the receiver is a payee, the sender is a payer, and the data is an amount; and
the determining a credit between a receiver and a sender specifically comprises:
determining a credit amount between the payee and the payer.

8. The method of claim 7, wherein the selecting a corresponding data transmission protection mechanism according to the credit between the receiver and the sender specifically comprises:
sending a warning to the payee and performing a check when the credit amount is zero, and transmitting the amount after the check succeeds;
sending a payment amount over-limit warning and performing a check when the payment amount is greater than the credit amount, and transmitting the amount after the check succeeds; and
transmitting the amount without performing a check when the payment amount is not greater than the credit amount.

9. A data transmission method, comprising the following steps:
receiving a data transmission request of a sender;
determining a credit between a receiver and the sender of data transmission;
selecting a corresponding data transmission protection mechanism according to the credit between the receiver and the sender; and
providing the protection of the data transmission protection mechanism to complete the data transmission.

10. The method of claim 9, wherein the providing the protection of the data transmission protection mechanism to complete the data transmission specifically comprises:
sending a warning to the sender and performing a check when the credit is zero or a data transmission volume is greater than the credit, and transmitting data after the check succeeds; and
sending the credit between the receiver and the sender to the sender when the data transmission volume is not greater than the credit, and transmitting data without performing a check.

11. The method of claim 9, wherein the receiver is a payee, the sender is a payer, and the data is an amount; and
the determining a credit between a receiver and the sender specifically comprises:
determining a credit amount between the payee and the payer.

12. A data transmission method, comprising the following steps:
sending a data transmission request to a server; and
transmitting data to a receiver under the protection of a data transmission protection mechanism;
wherein, the data transmission protection mechanism is selected by the server according to a credit between the receiver and a sender of data transmission.

13. The method of claim 12, wherein the transmitting data to a receiver under the protection of a data transmission protection mechanism specifically comprises:
receiving a warning sent by the server and performing a check when the credit is zero or a data transmission volume is greater than the credit, and transmitting data after the check succeeds; and
receiving the credit between the receiver and the sender sent by the server when the data transmission volume is not greater than the credit, and transmitting data without performing a check.

14. The method of claim 12, wherein the receiver is a payee, the sender is a payer, and the data is an amount.

15. A data transmission system, comprising:
an operation module configured to determine a credit between a receiver and a sender;
a selection module configured to select a corresponding data transmission protection mechanism according to the credit between the receiver and the sender; and
a transmission module configured to transmit data under the protection of the selected data transmission protection mechanism.

16. The system of claim 15, wherein the operation module being configured to determine a credit between a receiver and a sender is specifically configured to:
calculate a first credit between the receiver and the sender according to the recorded number of data transmissions and a recorded data transmission volume between the receiver and the sender.

17. The system of claim 15, wherein the operation module being configured to determine a credit between a receiver and a sender is specifically configured to:
determine a third party that has data transmission records with both the receiver and the sender; and
calculate a second credit between the receiver and the sender according to the number of data transmissions and a data transmission volume between the receiver and the third party, and the number of data transmissions and a data transmission volume between the sender and the third party.

18. The system of claim 15, wherein the operation module being configured to determine a credit between a receiver and a sender is specifically configured to:
calculate a first credit between the receiver and the sender according to the recorded number of data transmissions and a recorded data transmission volume between the receiver and the sender;
determine a third party that has data transmission records with both the receiver and the sender;
calculate a second credit between the receiver and the sender according to the number of data transmissions and a data transmission volume between the receiver and the third party, and the number of data transmissions and a data transmission volume between the sender and the third party; and
determine a comprehensive credit between the receiver and the sender according to the first credit and the second credit.

19. The system of claim 18, wherein the operation module being configured to determine a comprehensive credit between the receiver and the sender according to the first credit and the second credit is specifically configured to:
take a maximum of the first credit and the second credit as the comprehensive credit, or take a weighted sum of the first credit and the second credit as the comprehensive credit.

20. The system of claim 15, wherein the selection module being configured to select a corresponding data transmission protection mechanism according to the credit is specifically configured to:
perform a check when the credit is zero or a data transmission volume is greater than the credit, and transmit data after the check succeeds; and
transmit data without performing a check when the data transmission volume is not greater than the credit.

21. The system of claim 15, wherein the receiver is a payee, the sender is a payer, and the data is an amount; and
the operation module being configured to determine a credit between a receiver and a sender is specifically configured to:
determine a credit amount between the payee and the payer.

22. The system of claim 21, wherein the selection module being configured to select a corresponding data transmission protection mechanism according to the credit between the receiver and the sender is specifically configured to:
send a warning to the payee and perform a check when the credit amount is zero, and transmit the data after the check succeeds;
send a payment amount over-limit warning and perform a check when the payment amount is greater than the credit amount, and transmit the amount after the check succeeds; and
transmit the amount without performing a check when the payment amount is not greater than the credit amount.

23. A data transmission system, comprising:
a receiving module configured to receive a data transmission request of a sender;
an operation module configured to determine a credit between a receiver and the sender of data transmission;
a security module configured to select a corresponding data transmission protection mechanism according to the credit between the receiver and the sender; and
a transmission module configured to provide the protection of the data transmission protection mechanism to complete the data transmission.

24. The system of claim 23, wherein the transmission module is configured to:
send a warning to the sender and perform a check when the credit is zero or a data transmission volume is greater than the credit, and transmit data after the check succeeds; and
send the credit between the receiver and the sender to the sender when the data transmission volume is not greater than the credit, and transmit data without performing a check.

25. The system of claim 23, wherein the receiver is a payee, the sender is a payer, and the data is an amount; and the credit is a credit amount between the payee and the payer.

26. A data transmission system, comprising:
a transmission module configured to send a data transmission request to a server, and transmit data to a receiver under the protection of a data transmission protection mechanism;
wherein, the data transmission protection mechanism is selected by the server according to a credit between the receiver and a sender of data transmission.

27. The system of claim 26, wherein the transmission module is configured to:
receive a warning sent by the server and perform a check when the credit is zero or a data transmission volume is greater than the credit, and transmit data after the check succeeds; and
receive the credit between the receiver and the sender sent by the server when the data transmission volume is not greater than the credit, and transmit data without performing a check.

28. The system of claim 26, wherein the receiver is a payee, the sender is a payer, and the data is an amount.
